(19) Europäisches Patentamt
European Patent Office
Office européen des brevets

(11) **EP 3 165 750 A1**

(12) **EUROPÄISCHE PATENTANMELDUNG**

(43) Veröffentlichungstag:
**10.05.2017   Patentblatt 2017/19**

(21) Anmeldenummer: **15192922.1**

(22) Anmeldetag: **04.11.2015**

(51) Int Cl.:
*F02D 41/14* *(2006.01)*      *F02D 41/22* *(2006.01)*
*F02D 41/20* *(2006.01)*      *F02D 41/40* *(2006.01)*
*F02D 41/28* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **GE Jenbacher GmbH & Co. OG**
**6200 Jenbach (AT)**

(72) Erfinder:
• **Satria, Medy**
  **80805 München (DE)**
• **Imhof, Dino**
  **5400 Baden (CH)**
• **Burgmair, Raphael**
  **83620 Feldkirchen-Westerham (DE)**

(74) Vertreter: **Torggler & Hofinger Patentanwälte**
**Postfach 85**
**6010 Innsbruck (AT)**

(54)   **BRENNKRAFTMASCHINE MIT KRAFTSTOFFINJEKTORDIAGNOSE**

(57)   Brennkraftmaschine, mit:
- einer Regeleinrichtung,
- wenigstens einem durch die Regeleinrichtung über ein Aktuatoransteuersignal regelbaren Injektor für flüssigen Kraftstoff,
- wobei ein Sensor vorgesehen ist, durch welchen eine Messgröße des wenigstens einen Injektors messbar ist, wobei der Sensor in Signalverbindung mit der Regeleinrichtung steht, und
wobei in der Regeleinrichtung ein Algorithmus abgelegt ist, welcher anhand von Eingangsgrößen und eines Injektormodells einen Zustand des Injektors berechnet, den mittels des Injektormodells berechneten Zustand mit einem Sollzustand vergleicht, und in Abhängigkeit davon ein Zustandssignal (C) erzeugt, welches charakteristisch für eine bei bestimmungsgemäßem Gebrauch des Injektors auftretende Änderung des Zustandes des Injektors und/oder eine unvorhergesehene Änderung des Zustandes des Injektors ist, wobei die Eingangsgrößen zumindest das Aktuatoransteuersignal ($\Delta t$) und die Messwerte (y) des Sensors umfassen, sowie ein Verfahren zum Betreiben einer solchen Brennkraftmaschine und eines Injektors einer solchen Brennkraftmaschine.

Fig. 1

**Beschreibung**

Die vorliegende Erfindung betrifft eine Brennkraftmaschine mit den Merkmalen des Oberbegriffs des Anspruchs 1 und ein Verfahren mit den Merkmalen des Oberbegriffs des Anspruchs 14 bzw. 15.

Eine gattungsgemäße Brennkraftmaschine und ein gattungsgemäßes Verfahren gehen aus der DE 100 55 192 A1 hervor. In dieser Schrift ist ein Verfahren zur Rundlaufregelung von Dieselmotoren offenbart, wobei die Einspritzmenge der den Zylindern zugeordneten Injektoren mit Hilfe eines Korrekturfaktors korrigiert wird.

Problematisch beim Stand der Technik ist, dass man die Injektoren nach einer gewissen Lebensdauer (Anzahl an Betriebsstunden) austauscht, ohne zu wissen, ob der Austausch basierend auf dem internen Zustand des Injektors überhaupt erforderlich ist.

Aufgabe der Erfindung ist die Bereitstellung einer Brennkraftmaschine und eines Verfahrens, bei welchen nur solche Injektoren ausgetauscht werden müssen, bei welchen dies aufgrund ihres internen Zustandes tatsächlich erforderlich ist.

Diese Aufgabe wird durch eine Brennkraftmaschine mit den Merkmalen des Anspruchs 1 und ein Verfahren mit den Merkmalen des Anspruchs 14 bzw. 15 gelöst. Vorteilhafte Ausführungsformen der Erfindung sind in den abhängigen Ansprüchen definiert.

Als Beispiel für den flüssigen Kraftstoff sei Diesel genannt. Es könnte auch Schweröl oder ein anderer selbstzündfähiger Kraftstoff sein.

Die Erfindung sieht vor, dass in der Regeleinrichtung ein Algorithmus abgelegt ist, welcher anhand von Eingangsgrößen und eines Injektormodells einen Zustand des Injektors berechnet und den mittels des Injektormodells berechneten Zustand mit einem Sollzustand vergleicht und in Abhängigkeit des Ergebnisses ein Zustandssignal erzeugt, welches charakteristisch für eine bei bestimmungsgemäßem Gebrauch des Injektors auftretende Änderung des Zustandes des Injektors (z. B. durch Alterung und/oder Abnutzung) und/oder eine unvorhergesehene Änderung des Zustandes des Injektors (z. B. durch Beschädigung des Injektors oder übermäßige Bildung von Ablagerungen) ist, wobei die Eingangsgrößen zumindest das Aktuatoransteuersignal und die Messwerte des Sensors umfassen.

Die Regeleinrichtung vergleicht einen bei Ausführung des Algorithmus vorliegenden Wert (vorgegebener Normalwert oder Wert aus einem oder mehreren der letzten Verbrennungszyklen) für wenigstens eine im Injektormodell enthaltene Größe (z. B. Druckverlauf in einem der Volumina oder Massenströme zwischen benachbarten Volumina oder die Kinematik der Nadel, jeweils während eines Einspritzvorganges) mit dem durch den Algorithmus ermittelten aktuellen abgeschätzten Wert. Aus einer allfälligen Änderung kann auf den Zustand des Injektors rückgeschlossen werden. Auf Basis des Rückschlusses kann die Regeleinrichtung das für den Zustand des Injektors repräsentative Signal erzeugen.

Ändert sich z. B. bei gleichbleibender Dauer der Betätigung des Aktuators die abgeschätzte Kinematik der Nadel dahingehend, dass ein Abheben der Nadel vom Nadelsitz langsamer oder schneller erfolgt, interpretiert dies die Regeleinrichtung so, dass eine Änderung des Zustandes des Injektors erfolgt ist. Dies kann auf eine Abnutzung, Alterung oder Beschädigung des Injektors zurückzuführen sein und die Regeleinrichtung kann (z.B. auf Basis von Erfahrungswerten) eine verbleibende Lebensdauer des Injektors bestimmen. Ist die Abweichung größer als ein vorgegebener Sollwert, kann die Regeleinrichtung auf Basis des Zustandssignals angeben, wann oder dass der Injektor auszutauschen ist.

Bevorzugt ist vorgesehen, dass der Algorithmus eine Vorsteuerung aufweist, welche aus einem gewünschten Sollwert der Masse an flüssigem Kraftstoff und/oder einem Nadelpositionssollwert ein Vorsteuersignal für das Aktuatoransteuersignal berechnet. Die Vorsteuerung stellt eine schnelle Systemantwort sicher, da sie im Falle notwendiger Korrekturen des Aktuatoransteuersignals oder des Vorsteuersignals den Aktuator so ansteuert, als ob keine Injektorvariabilität existieren würde. Die Vorsteuerung verwendet z. B. ein Injektorkennfeld (welches beispielsweise bei einem als Solenoidventil ausgebildeten Aktuator die Bestromungsdauer über die Einspritzmasse oder - volumen angibt) oder ein invertiertes Injektormodell um den Sollwert der einzuspritzenden Masse an flüssigem Kraftstoff und/oder den Nadelpositionssollwert in den Vorsteuerbefehl umzuwandeln.

Bei einer Ausbildung der Regeleinrichtung mit Vorsteuerung kann besonders bevorzugt vorgesehen sein, dass der Algorithmus eine Rückkopplungsschleife aufweist, welche unter Berücksichtigung des von der Vorsteuerung berechneten Aktuatoransteuersignals und der wenigstens einen Messgröße mittels des Injektormodells die über die Ausbringöffnung des Injektors eingespritzte Masse an flüssigem Kraftstoff berechnet und ggf. (bei Vorliegen einer Abweichung) das von der Vorsteuerung berechnete Vorsteuersignal für das Aktuatoransteuersignal korrigiert. Die Rückkopplungsschleife wird verwendet, um die Ungenauigkeiten der Vorsteuerung (aufgrund von Herstellungsvariabilitäten, Abnutzung, usw.), welche eine Injektordrift verursachen, zu korrigieren.

Bevorzugt weist der Algorithmus einen Beobachter auf, welcher unter Verwendung des Injektormodells die eingespritzte Masse an flüssigem Kraftstoff und/oder die Position der Nadel in Abhängigkeit der wenigstens einen Messgröße und des zumindest einen Aktuatoransteuersignals abschätzt. Eine tatsächliche Messung der eingespritzten Masse an flüssigem Kraftstoff bzw. die Messung der Position der Nadel ist daher für die Rückkopplungsschleife nicht erforderlich. Unabhängig davon, ob eine Rückkopplungsschleife vorgesehen ist, kann die vom Beobachter abgeschätzte eingespritzte Masse an flüssigem Kraftstoff und/oder die abgeschätzte Position der Nadel in der Vorsteuerung verwendet werden um das Aktuatoransteuersignal zu verbessern.

Verschiedene mögliche Ausbildungen des Beobachters sind dem Fachmann aus der Literatur bekannt (z. B. Luenberger-Beobachter, Kaiman-Filter, "Sliding Mode" Beobachter, usw.).

Grundsätzlich ist es möglich, das Aktuatoransteuersignal auf Basis des Sollwertes für die eingespritzte Masse an flüssigem Kraftstoff und/oder der Position der Nadel und auf Basis der vom Beobachter abgeschätzten Masse an flüssigem Kraftstoff bzw. der abgeschätzten Position der Nadel zu berechnen. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

Es kann vorgesehen sein, dass das Injektormodell wenigstens beinhaltet:

- die Druckverläufe in mit dem flüssigen Kraftstoff gefüllten Volumina des Injektors
- Massenflussraten zwischen den mit dem flüssigen Kraftstoff gefüllten Volumina des Injektors
- kinematische Größen der Nadel, z. B. eine Position der Nadel, vorzugsweise relativ zum Nadelsitz
- Dynamik des Aktuators der Nadel, vorzugsweise Dynamik eines Solenoidventils

Durch die Erfindung ist es möglich, ausgewählte oder alle der oben angeführten Größen im Laufe der Zeit zu überwachen und ggf. mit einer Wartung oder dem Austausch des Injektors zu reagieren ("condition based maintenance").

Der Injektor kann wenigstens aufweisen:

- eine mit einer Common-Rail der Brennkraftmaschine verbundene Eingangsspeicherkammer
- eine mit der Eingangsspeicherkammer verbundene Speicherkammer für flüssigen Kraftstoff
- einem mit der Speicherkammer verbundenen Volumen über Nadelsitz
- einem einerseits mit der Speicherkammer und andererseits mit einer Ablaufleitung verbundenen Verbindungsvolumen
- eine durch eine Nadel verschließbare und mit dem Volumen über Nadelsitz verbundene Ausbringöffnung für flüssigen Kraftstoff
- einen mittels des Aktuatoransteuersignals ansteuerbaren Aktuator, vorzugsweise Solenoidventil, zum Öffnen der Nadel
- vorzugsweise einer einerseits mit der Speicherkammer und andererseits mit dem Verbindungsvolumen verbundenen Steuerkammer

Die Nadel ist üblicherweise entgegen der Öffnungsrichtung durch eine Feder vorgespannt.

Es kann auch ein Injektor vorgesehen sein, der ohne Steuerkammer auskommt, beispielsweise ein Injektor, bei welchem die Nadel durch ein Piezoelement angesteuert wird.

Die wenigstens eine Messgröße kann z.B. ausgewählt sein aus den folgenden Größen oder einer Kombination daraus:

- Druck in einer Common-Rail der Brennkraftmaschine
- Druck in einer Eingangsspeicherkammer des Injektors
- Druck in einer Steuerkammer des Injektors
- Beginn des Abhebens der Nadel vom Nadelsitz

Die Regeleinrichtung kann dazu ausgebildet sein, den Algorithmus während jedes Verbrennungszyklus oder ausgewählter Verbrennungszyklen der Brennkraftmaschine auszuführen.

Alternativ kann die Regeleinrichtung dazu ausgebildet sein, den Algorithmus während jedes Verbrennungszyklus oder ausgewählter Verbrennungszyklen der Brennkraftmaschine auszuführen.

Alternativ oder zusätzlich zu einer der oben genannten Ausführungsformen kann die Regeleinrichtung dazu ausgebildet sein, den Algorithmus während jedes Verbrennungszyklus oder ausgewählter Verbrennungszyklen der Brennkraftmaschine auszuführen und die aufgetretenen Abweichungen statisch auszuwerten.

Es ist für die Erfindung nicht unbedingt erforderlich, die Masse an eingespritztem flüssigen Kraftstoff oder die Position der Nadel unmittelbar zu messen. Es ist auch nicht erforderlich, unmittelbar aus der wenigstens einen Messgröße auf die tatsächlich eingespritzte Masse an flüssigem Kraftstoff oder auf die Position der Nadel rückzuschließen.

Ganz allgemein gilt: Anstelle der Masse an eingespritztem Kraftstoff könnten natürlich auch das Volumen oder andere Größen berechnet werden, welche für eine bestimmte Masse an eingespritztem Kraftstoff charakteristisch sind. Alle diese Möglichkeiten sind in der vorliegenden Offenbarung bei Verwendung des Begriffs "Masse" erfasst.

Die Erfindung kann bevorzugt bei einer stationären Brennkraftmaschine, für Marineanwendungen oder mobile Anwendungen wie sogenannte "Non-Road-Mobile-Machinery" (NRMM) - vorzugsweise jeweils als Hubkolbenmaschine - eingesetzt werden. Die Brennkraftmaschine kann als mechanischer Antrieb dienen, z. B. zum Betreiben von Verdichteranlagen oder mit einem Generator zu einem Gensets zur Erzeugung elektrischer Energie gekoppelt sein. Die Brennkraftmaschine weist bevorzugt eine Vielzahl von Brennräumen mit entsprechenden Gaszuführvorrichtungen und Injektoren auf. Die Regelung kann individuell für jeden Brennraum erfolgen.

Ausführungsbeispiele der Erfindung werden anhand der Figuren erläutert. Es zeigen:

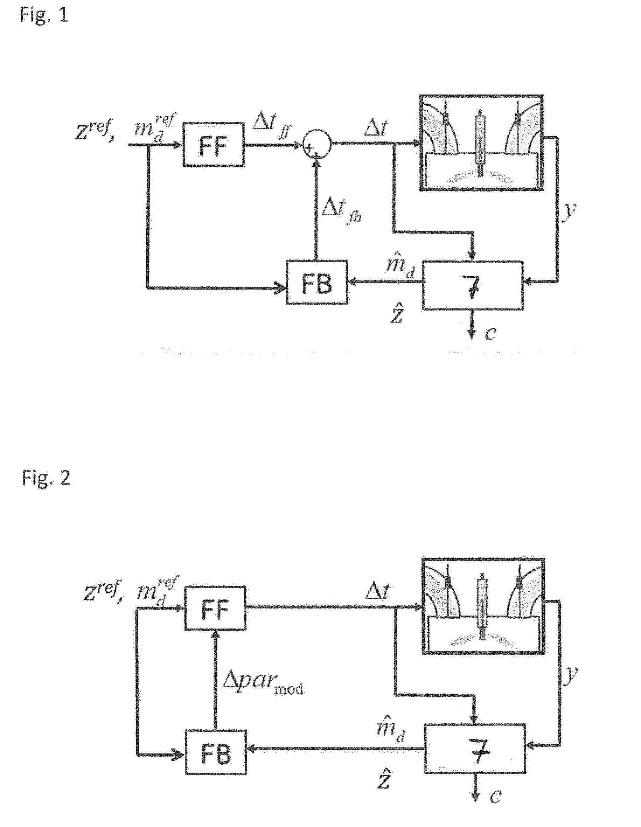

Fig. 1  ein erstes Ausführungsbeispiel eines ersten Regelschemas
Fig. 2  ein zweites Ausführungsbeispiel eines zweiten Regelschemas
Fig. 3  ein erstes Beispiel eines schematisch dargestellten Injektors
Fig. 4  ein zweites Beispiel eines schematisch dargestellten Injektors

Fig. 1:

Ziel der Injektorregelung bei diesem Ausführungsbeispiel ist die Regelung der tatsächlich eingespritzten Masse an flüssigem Kraftstoff und/oder der Position z der Nadel auf einen Sollwert $m_d^{ref}$ bzw. $z^{ref}$ hin, indem die Einspritzdauer bzw. die Dauer der Betätigung des Aktuators der Nadel $\Delta t$ gesteuert wird. Die Regelstrategie erfolgt durch

- eine Vorsteuerung (FF), welche aus einem gewünschten Sollwert der Masse $m_d^{ref}$ an flüssigem Kraftstoff und/oder einem Nadelpositionssollwert $z^{ref}$ ein Vorsteuersignal $\Delta t_{ff}$ (im Folgenden auch als "Steuerbefehl" bezeichnet) für die Einspritzdauer bzw. der Dauer der Betätigung des Aktuators berechnet und

- eine Rückkopplungsschleife (FB), welche unter Verwendung eines Beobachters 7 ("State Estimator") unter Berücksichtigung des von der Vorsteuerung berechneten Vorsteuersignals $\Delta t_{ff}$ und wenigstens einer Messgröße y (z. B. einer der im Injektor auftretenden Druckverläufe $p_{IA}$, $p_{CC}$, $p_{JC}$, $p_{AC}$, $p_{SA}$ oder der Beginn des Abhebens der Nadel vom Nadelsitz) mittels eines Injektormodells den über die Ausbringöffnung des Injektors ausgebrachten Massenstrom $\hat{m}_d$ an flüssigem Kraftstoff und/oder die Position der Nadel z abgeschätzt und ggf. das von der Vorsteuerung berechnete Vorsteuersignal $\Delta t_{ff}$ mittels eines Korrekturwertes $\Delta t_{fb}$ korrigiert. Der Beobachter gibt weiters das Zustandssignal C aus.

Die Vorsteuerung stellt eine schnelle Systemantwort sicher, da sie den Injektor mit einer Einspritzdauer $\Delta t$ ansteuert, als ob keine Injektorvariabilität existieren würde. Die Vorsteuerung verwendet ein kalibriertes Injektorkennfeld (welches Bestromungsdauer über Einspritzmasse oder -volumen angibt) oder das invertierte Injektormodell um den Sollwert der Masse $m_d^{ref}$ an flüssigem Kraftstoff und/oder den Nadelpositionssollwert $z^{ref}$ in den Vorsteuerbefehl $\Delta t_{ff}$ umzuwandeln.

Die Rückkopplungsschleife (FB) wird verwendet um die Ungenauigkeiten der Vorsteuerung (aufgrund von Herstellungsvariabilitäten, Abnutzung, usw.) zu korrigieren, welche eine Injektordrift verursachen. Die Rückkopplungsschleife vergleicht den Sollwert $m_d^{ref}$ und/oder $z^{ref}$ mit der abgeschätzten eingespritzten Masse $\hat{m}_d$ an flüssigem Kraftstoff bzw. der abgeschätzten Position der Nadel z und gibt als Rückkopplung einen Korrektursteuerbefehl $\Delta t_{fb}$ (welche auch negativ sein kann) für die Einspritzdauer bzw. für die Dauer der Betätigung des Aktuators ab, falls es eine Diskrepanz zwischen $m_d^{ref}$ und $\hat{m}_d$ bzw. $z^{ref}$ und z gibt. Die Addition von $\Delta t_{ff}$ und $\Delta t_{fb}$ ergibt die schlussendliche Einspritzdauer $\Delta t$ bzw. die Dauer der Betätigung des Aktuators.

Der Beobachter schätzt die eingespritzte Masse $\hat{m}_d$ an flüssigem Kraftstoff und/oder die Position der Nadel z in Abhängigkeit der wenigsten einen Messgröße y und der schlussendlichen Einspritzdauer $\Delta t$ bzw. der Dauer der Betätigung des Aktuators ab. Die wenigstens eine Messgröße kann sich beziehen auf: common rail Druck $p_{CR}$, Druck in der Eingangsspeicherkammer $p_{IA}$, Druck in der Steuerkammer $p_{CC}$ und Beginn des Abhebens der Nadel vom Nadelsitz . Der Beobachter verwendet ein reduziertes Injektormodell um die eingespritzte Masse $\hat{m}_d$ an flüssigem Kraftstoff oder die Position der Nadel z abzuschätzen.

Fig. 2

Diese Figur zeigt eine einteilige aufgebaute Regelung, bei welcher das Aktuatoransteuersignal $\Delta t$ auf Basis des Sollwertes $m_d^{ref}$ für die eingespritzte Masse an flüssigem Kraftstoff und/oder des Nadelpositionssollwertes $z^{ref}$ und auf Basis der vom Beobachter abgeschätzten, im Vorsteuermodell benutzten Parameter $\Delta par_{mod}$ berechnet wird. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

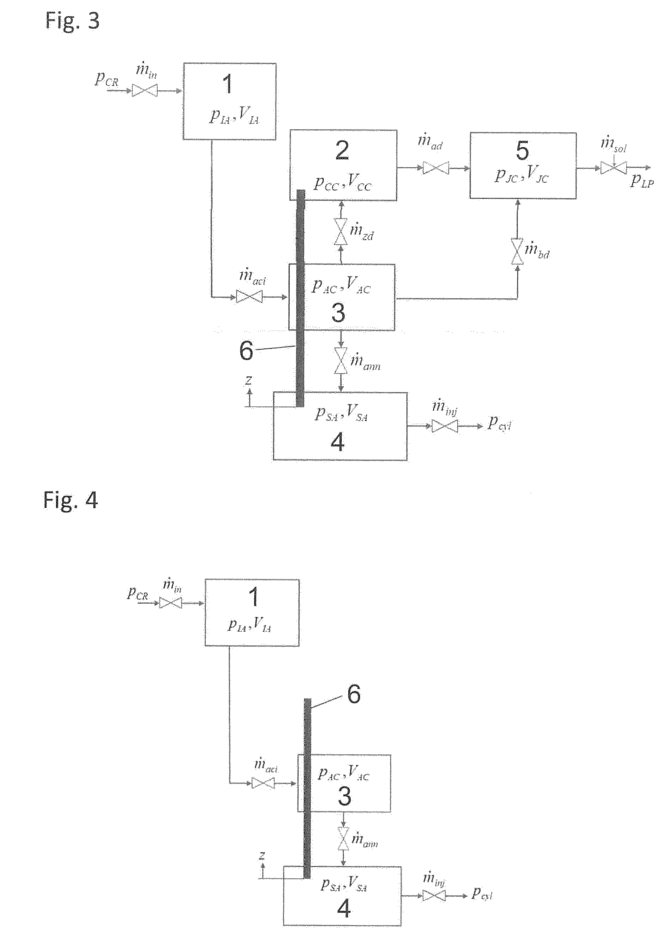

Die Fig. 3 zeigt ein Blockdiagramm eines reduzierten Injektormodells. Das Injektormodell besteht aus einem Strukturmodell des Injektors und einem Gleichungssystem zur Beschreibung des dynamischen Verhaltens des Strukturmodells. Das Strukturmodell besteht aus fünf modellierten Volumina: Eingangsspeicherkammer 1, Speicherkammer 3, Steuerkammer 2, Volumen über Nadelsitz 4 und Verbindungsvolumen 5.

Die Eingangsspeicherkammer 1 stellt die Zusammenfassung aller Volumina zwischen der Eingangsdrossel und dem Rückschlagventil dar. Die Speicherkammer 3 stellt die Zusammenfassung aller Volumina vom Rückschlagventil bis zum Volumen 4 oberhalb des Nadelsitzes dar. Das Volumen 4 über Nadelsitz stellt die Zusammenfassung aller Volumina zwischen dem Nadelsitz bis zur Ausbringöffnung des Injektors dar. Das Verbindungsvolumen 5 stellt die Zusammenfassung aller Volumina dar, welches die Volumina der Speicherkammer 3 und der Steuerkammer 2 mit dem Solenoidventil verbindet.

Die Fig. 4 zeigt einen alternativ ausgebildeten Injektor, der ohne Steuerkammer 2 auskommt, beispielsweise ein Injektor, bei welchem die Nadel 6 durch ein Piezoelement angesteuert wird.

Das nachfolgende Gleichungssystem bezieht sich nicht auf die in Figur 4 gezeigte Ausführung. Die Formulierung eines entsprechenden Gleichungssystems kann analog zu dem nachstehend gezeigten Gleichungssystem erfolgen.

Das dynamische Verhalten des Strukturmodells wird durch folgende Gleichungssysteme beschrieben:

Druckdynamik

Die zeitliche Entwicklung des Druckes innerhalb jedes der Volumina wird auf Basis einer Kombination des Massenerhaltungssatzes und der Druck-Dichte-Charakteristik des flüssigen Kraftstoffes berechnet. Die zeitliche Entwicklung des Druckes ergibt sich aus:

$$\dot{p}_{IA} = \frac{K_f}{\rho_{IA} V_{IA}} (\dot{m}_{in} - \dot{m}_{aci}) \qquad \text{Gl. 1.1}$$

$$\dot{p}_{CC} = \frac{K_f}{\rho_{CC} V_{CC}} (\dot{m}_{zd} - \dot{m}_{ad} - \rho_{CC} \dot{V}_{CC}) \qquad \text{Gl. 1.2}$$

$$\dot{p}_{JC} = \frac{K_f}{\rho_{JC} V_{JC}} (\dot{m}_{bd} + \dot{m}_{ad} - \dot{m}_{sol}) \qquad \text{Gl. 1.3}$$

$$\dot{p}_{AC} = \frac{K_f}{\rho_{AC} V_{AC}} (\dot{m}_{aci} - \dot{m}_{ann} - \dot{m}_{bd} - \dot{m}_{zd} - \rho_{AC} \dot{V}_{AC}) \qquad \text{Gl. 1.4}$$

$$\dot{p}_{SA} = \frac{K_f}{\rho_{SA} V_{SA}} (\dot{m}_{ann} - \dot{m}_{inj} - \rho_{SA} \dot{V}_{SA}) \qquad \text{Gl. 1.5}$$

Verwendete Formelzeichen

$p_{IA}$    : Druck in der Eingangsspeicherkammer 1 in bar
$p_{CC}$    : Druck in der Steuerkammer 2 in bar
$p_{JC}$    : Druck im Verbindungsvolumen 5 in bar
$p_{AC}$    : Druck in der Speicherkammer 3 in bar
$p_{SA}$    : Druck in der kleinen Speicherkammer 4 in bar
$\rho_{IA}$    : Dieselmassendichte innerhalb der Eingangsspeicherkammer 1 in $kg/m^3$
$\rho_{CC}$    : Dieselmassendichte innerhalb der Steuerkammer 2 in $kg/m^3$
$\rho_{JC}$    : Dieselmassendichte innerhalb des Verbindungsvolumens 5 in $kg/m^3$
$\rho_{AC}$    : Dieselmassendichte innerhalb der Speicherkammer 3 in $kg/m^3$
$\rho_{SA}$    : Dieselmassendichte innerhalb der kleinen Speicherkammer 4 in $kg/m^3$
$K_f$    : Kompressionsmodul des Dieseltreibstoffs in bar

Nadeldynamik

Die Nadelposition wird anhand der folgenden Bewegungsgleichung berechnet:

$$\ddot{z} = \begin{cases} 0 \; if \; F_{hyd} \leq F_{pre} \\ \frac{1}{m}\left(F_{hyd} - Kz - B\dot{z} - F_{pre}\right) if \; F_{hyd} > F_{pre} \end{cases} \qquad \text{Gl. 2.1}$$

$$F_{hyd} = p_{AC}A_{AC} + p_{SA}A_{SA} - p_{CC}A_{CC} \qquad \text{Gl. 2.2}$$

$$0 \leq z \leq z_{max} \qquad \text{Gl. 2.3}$$

Verwendete Formelzeichen:

$z$ : Nadelposition in Metern (m)
$z_{max}$ : Maximale Auslenkung der Nadel 6 in m
$K$ : Federsteifigkeit in N/m
$B$ : Federdämpfungskoeffizient in N.s/m
$F_{pre}$ : Federvorspannung in N
$A_{AC}$ : Hydraulische Wirkfläche in der Speicherkammer 3 in $m^2$
$A_{SA}$ : Hydraulische Wirkfläche in der kleinen Speicherkammer 4 in $m^2$
$A_{CC}$ : Hydraulische Wirkfläche in der Steuerkammer 2 in $m^2$

Dynamik des Solenoidventils

Das Solenoidventil wird durch eine Transferfunktion erster Ordnung modelliert, welche den Ventilöffnungsbefehl in eine Ventilposition umwandelt. Diese ist gegeben durch:

$$u_{sol}^{cmd} \longrightarrow \boxed{\frac{z_{sol}^{max}}{\tau_{sol}s + 1}} \longrightarrow z_{sol}$$

Das transiente Systemverhalten wird durch die Zeitkonstante $\tau_{sol}$ charakterisiert und die Position der Nadel 6 bei der maximalen Ventilöffnung ist durch $z_{sol}^{max}$| gegeben. Statt einem Solenoidventil ist auch eine piezoelektrische Betätigung möglich.

Massenflussraten

Die Massenflussrate durch jedes Ventil wird aus der Standarddrosselgleichung für Flüssigkeiten berechnet, welche lautet:

$$\dot{m}_{in} = A_{in}C_{din}\sqrt{2\rho_j|p_{CR} - p_{IA}|}.sgn(p_{CR} - p_{IA}) \qquad \text{Gl. 3.1}$$

$$\dot{m}_{bd} = A_{bd}C_{dbd}\sqrt{2\rho_j|p_{AC} - p_{JC}|}.sgn(p_{AC} - p_{JC}) \qquad \text{Gl. 3.2}$$

$$\dot{m}_{zd} = A_{zd}C_{dzd}\sqrt{2\rho_j|p_{AC} - p_{CC}|}.sgn(p_{AC} - p_{CC}) \qquad \text{Gl. 3.3}$$

$$\dot{m}_{ad} = A_{ad}C_{dad}\sqrt{2\rho_j|p_{CC} - p_{JC}|}.sgn(p_{CC} - p_{JC}) \qquad \text{Gl. 3.4}$$

$$\dot{m}_{sol} = A_{sol}C_{dsol}\sqrt{2\rho_j|p_{JC} - p_{LP}|}.sgn(p_{JC} - p_{LP}) \qquad \text{Gl. 3.5}$$

$$\dot{m}_{aci} = A_{aci}C_{daci}\sqrt{2\rho_j|p_{IA} - p_{AC}|}.sgn(p_{IA} - p_{AC}) \qquad \text{Gl. 3.6}$$

$$\dot{m}_{ann} = A_{ann}C_{dann}\sqrt{2\rho_j|p_{AC} - p_{SA}|}.sgn(p_{AC} - p_{SA}) \qquad \text{Gl. 3.7}$$

$$\dot{m}_{inj} = A_{inj}C_{dinj}\sqrt{2\rho_{SA}|p_{SA} - p_{cyl}|}.sgn(p_{SA} - p_{cyl}) \qquad \text{Gl. 3.8}$$

$$\rho_j = \begin{cases} \rho_{in} \; if \; p_{in} \geq p_{out} \\ \rho_{out} \; if \; p_{in} < p_{out} \end{cases} \qquad \text{Gl. 3.9}$$

Verwendete Formelzeichen:

$\dot{m}_{in}$     : Massenflussdichte über die Eingangsdrossel in kg/s

$\dot{m}_{bd}$     : Massenflussrate über das Bypassventil zwischen Speicherkammer 3 und Verbindungsvolumen 5 in kg/s

$\dot{m}_{zd}$     : Massenflussrate über das Speiseventil beim Einlass der Steuerkammer 2 in kg/s

$\dot{m}_{ad}$     : Massenflussrate über das Auslassventil der Steuerkammer 2 in kg/s

$\dot{m}_{sol}$     : Massenflussrate über das Solenoidventil in kg/s

$\dot{m}_{aci}$     : Massenflussrate über den Einlass der Speicherkammer 3 in kg/s

$\dot{m}_{ann}$     : Massenflussrate über den Nadelsitz in kg/s

$\dot{m}_{inj}$     : Massenflussrate über die Injektordüse in kg/s

Auf Basis des oben formulierten Injektormodells erhält der Fachmann mittels des Beobachters in an sich bekannter Weise (siehe z. B. Isermann, Rolf, "Digitale Regelsysteme", Springer Verlag Heidelberg 1977, Kapital 22.3.2, Seite 379 ff. oder F. Castillo et al., "Simultaneous Air Fraction and Low-Pressure EGR Mass Flow Rate Estimation for Diesel Engines", IFAC Joint conference SSSC-5th Symposium on System Structure and Control, Grenoble, France 2013) den abgeschätzten Wert $\hat{\dot{m}}_d$ und/oder z und das Zustandssignal C.

Unter Verwendung obiger Gleichungssysteme konstruiert man die sogenannten Beobachtergleichungen ("observer equations"), vorzugsweise unter Verwendung eines an sich bekannten Beobachters vom "sliding mode observer"-Typ, indem man zu den Gleichungen des Injektormodells das sogenannte Beobachtergesetz ("observer law") hinzufügt. Bei einem "sliding mode" Beobachter erhält man das Beobachtergesetz durch Berechnung einer Hyperfläche ("hypersurface") aus dem wenigstens einen Messsignal und jenem Wert, der sich aus den Beobachtergleichungen ergibt. Durch Quadrierung der Gleichung der Hyperfläche erhält man eine verallgemeinerte Ljapunovgleichung (verallgemeinerte Energiegleichung). Dabei handelt es sich um eine Funktionalgleichung. Das Beobachtergesetz ist jene Funktion, welche die Funktionalgleichung minimiert. Diese kann durch die an sich bekannten Variationstechniken oder numerisch bestimmt werden. Dieser Vorgang wird innerhalb eines Verbrennungszyklus für jeden Zeitschritt (abhängig von der zeitlichen Auflösung der Regelung) durchgeführt.

Das Ergebnis ist je nach Anwendung die abgeschätzte eingespritzte Masse an flüssigem Kraftstoff, die Position der Nadel 6 oder einer der Drücke in einem der Volumina des Injektors.

**Patentansprüche**

1. Brennkraftmaschine, mit:

- einer Regeleinrichtung

- wenigstens einem durch die Regeleinrichtung über ein Aktuatoransteuersignal regelbaren Injektor für flüssigen Kraftstoff, wobei der wenigstens eine Injektor über eine durch eine Nadel verschließbare Ausbringöffnung für den flüssigen Kraftstoff verfügt

- und wobei ein Sensor vorgesehen ist, durch welchen eine Messgröße des wenigstens einen Injektors messbar ist, wobei der Sensor in Signalverbindung mit der Regeleinrichtung steht oder bringbar ist, **dadurch gekennzeichnet, dass** in der Regeleinrichtung ein Algorithmus abgelegt ist, welcher anhand von Eingangsgrößen und eines Injektormodells einen Zustand des Injektors berechnet und den mittels des Injektormodells berechneten Zustand mit einem Sollzustand vergleicht und in Abhängigkeit des Ergebnisses ein Zustandssignal (C) erzeugt, welches charakteristisch für eine bei bestimmungsgemäßem Gebrauch des Injektors auftretende Änderung des Zustandes des Injektors und/oder eine unvorhergesehene Änderung des Zustandes des Injektors ist, wobei die Eingangsgrößen zumindest das Aktuatoransteuersignals ($\Delta t$) und die Messwerte (y) des Sensors umfassen.

2. Brennkraftmaschine nach Anspruch 1, wobei der Algorithmus eine Vorsteuerung (FF) aufweist, welche aus einem gewünschten Sollwert $\left(m_d^{ref}\right)$ der Masse an flüssigem Kraftstoff und/oder einem Nadelpositionssollwert ($z^{ref}$) ein Vorsteuersignal ($\Delta t_{ff}$) für das Aktuatoransteuersignal ($\Delta t$) berechnet.

3. Brennkraftmaschine nach Anspruch 2, wobei der Algorithmus eine Rückkopplungsschleife (FB), welche unter Berücksichtigung des von der Vorsteuerung berechneten Aktuatoransteuersignals ($\Delta t$) und der wenigstens einen Messgröße (y) mittels des Injektormodells die über die Ausbringöffnung des Injektors ausgebrachte Masse an flüssigem Kraftstoff und/oder die Position der Nadel berechnet und ggf. das Aktuatoransteuersignals ($\Delta t$) korrigiert.

4. Brennkraftmaschine nach wenigstens einem der vorangehenden Ansprüche, wobei der Algorithmus einen Beobachter aufweist, welcher unter Verwendung des Injektormodells und unter Berücksichtigung des Aktuatoransteuersignals ($\Delta t$) und der wenigstens einen Messgröße (y) die eingespritzte Masse ($\hat{m}_d$) an flüssigem Kraftstoff und/oder die Position (z) der Nadel abschätzt.

5. Brennkraftmaschine nach wenigstens einem der vorangehenden Ansprüche, wobei das Injektormodell wenigstens beinhaltet:

   - die Druckverläufe ($p_{IA}$, $p_{CC}$, $p_{JC}$, $p_{AC}$, $p_{SA}$) in mit dem flüssigen Kraftstoff gefüllten Volumina des Injektors
   - Massenflussraten (m) zwischen den mit dem flüssigen Kraftstoff gefüllten Volumina des Injektors
   - eine kinematische Größe der Nadel, vorzugsweise eine Position (z) der Nadel, bevorzugt relativ zum Nadelsitz
   - Dynamik des Aktuators der Nadel, vorzugsweise Dynamik eines Solenoidventils

6. Brennkraftmaschine nach wenigstens einem der vorangehenden Ansprüche, wobei der Injektor wenigstens aufweist:

   - eine mit einer Common-Rail der Brennkraftmaschine verbundene Eingangsspeicherkammer (1)
   - eine mit der Eingangsspeicherkammer (1) verbundene Speicherkammer (3) für flüssigen Kraftstoff
   - einem mit der Speicherkammer (3) verbundenen Volumen (4) über Nadelsitz
   - einem einerseits mit der Speicherkammer (3) und andererseits mit einer Ablaufleitung verbundenen Verbindungsvolumen (5)
   - eine durch eine Nadel (6) verschließbare und mit dem Volumen (4) über Nadelsitz verbundene Ausbringöffnung für flüssigen Kraftstoff
   - einen mittels des Aktuatoransteuersignals ansteuerbaren Aktuator, vorzugsweise Solenoidventil, zum Öffnen der Nadel (6)
   - vorzugsweise einer einerseits mit der Speicherkammer (3) und andererseits mit dem Verbindungsvolumen (5) verbundenen Steuerkammer (2)

7. Brennkraftmaschine nach wenigstens einem der vorangehenden Ansprüche, wobei die wenigstens eine Messgröße ausgewählt ist aus den folgenden Größen oder einer Kombination daraus:

   - Druck ($p_{CR}$) in einer Common-Rail der Brennkraftmaschine
   - Druck ($p_{IA}$) in einer Eingangsspeicherkammer (1) des Injektors
   - Druck ($p_{CC}$) in einer Steuerkammer (2) des Injektors
   - Beginn des Abhebens der Nadel (6) vom Nadelsitz

8. Brennkraftmaschine nach Anspruch 7, wobei die Regeleinrichtung dazu ausgebildet ist, ein Zustandssignal zu erzeugen, welches Auskunft über eine Abweichung wenigstens einer der Messgrößen relativ zu einem vorgegebenen Wert zu geben.

9. Brennkraftmaschine nach wenigstens einem der vorangehenden Ansprüche, wobei die Regeleinrichtung dazu ausgebildet ist, den Algorithmus während jedes Verbrennungszyklus oder ausgewählter Verbrennungszyklen der Brennkraftmaschine auszuführen.

10. Brennkraftmaschine nach wenigstens einem der Ansprüche 1 bis 8, wobei die Regeleinrichtung dazu ausgebildet ist, den Algorithmus während jedes Verbrennungszyklus oder ausgewählter Verbrennungszyklen der Brennkraftmaschine auszuführen.

11. Brennkraftmaschine nach wenigstens einem der vorangehenden Ansprüche, wobei die Regeleinrichtung dazu ausgebildet ist, den Algorithmus während jedes Verbrennungszyklus oder ausgewählter Verbrennungszyklen der Brennkraftmaschine auszuführen und die aufgetretenen Abweichungen statisch auszuwerten.

12. Brennkraftmaschine nach wenigstens einem der vorangehenden Ansprüche, wobei die Regeleinrichtung dazu ausgebildet ist, auf Basis des Zustandssignals (C) eine verbleibende Lebensdauer des Injektors und/oder ob der Injektor auszutauschen ist, zu bestimmen.

13. Brennkraftmaschine nach wenigstens einem der vorangehenden Ansprüche, wobei die Regeleinrichtung dazu ausgebildet ist, auf Basis des Zustandssignals (C) eine Korrektur des Aktuatoransteuersignals ($\Delta t$) und/oder des Vorsteuersignals ($\Delta t_{ff}$) vorzunehmen.

14. Verfahren zum Betreiben einer Brennkraftmaschine, insbesondere einer Brennkraftmaschine nach wenigstens einem der vorangehenden Ansprüche, wobei einem Brennraum der Brennkraftmaschine flüssiger Kraftstoff zugeführt wird, **dadurch gekennzeichnet, dass** anhand von Eingangsgrößen und eines Injektormodells ein Zustand des Injektors berechnet wird und der mittels des Injektormodells berechnete Zustand mit einem Sollzustand verglichen wird und in Abhängigkeit des Ergebnisses ein Zustandssignal (C) erzeugt wird, welches charakteristisch für eine bei bestimmungsgemäßem Gebrauch des Injektors auftretende Änderung des Zustandes des Injektors und/oder eine unvorhergesehene Änderung des Zustandes des Injektors ist, wobei die Eingangsgrößen zumindest das Aktuatoransteuersignal ($\Delta t$) und die Messwerte (y) des Sensors umfassen.

15. Verfahren zum Betreiben eines Injektors, mit welchem Injektor flüssiger Kraftstoff in einen Brennraum einer Brennkraftmaschine eingespritzt werden kann, **dadurch gekennzeichnet, dass** anhand von Eingangsgrößen und eines Injektormodells ein Zustand des Injektors berechnet wird und der mittels des Injektormodells berechnete Zustand mit einem Sollzustand verglichen wird und in Abhängigkeit des Ergebnisses ein Zustandssignal (C) erzeugt wird, welches charakteristisch für eine bei bestimmungsgemäßem Gebrauch des Injektors auftretende Änderung des Zustandes des Injektors und/oder eine unvorhergesehene Änderung des Zustandes des Injektors ist, wobei die Eingangsgrößen zumindest das Aktuatoransteuersignal ($\Delta t$) und die Messwerte (y) des Sensors umfassen.

Fig. 1

Fig. 2

Fig. 3

Fig. 4

EP 3 165 750 A1

Europäisches Patentamt
European Patent Office
Office européen des brevets

**EUROPÄISCHER RECHERCHENBERICHT**

Nummer der Anmeldung

EP 15 19 2922

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/83969 A2 (CUMMINS INC [US]) 8. November 2001 (2001-11-08) * Seite 15, Zeile 29 - Seite 19, Zeile 9; Abbildungen 1-5 * | 1-15 | INV. F02D41/14 F02D41/22 F02D41/20 |
| X | EP 2 280 161 A1 (BOSCH CORP [JP]) 2. Februar 2011 (2011-02-02) * Absätze [0030], [0050] - [0057]; Abbildungen * | 1-15 | ADD. F02D41/40 F02D41/28 |
| A | US 2012/240670 A1 (TAKASHIMA YOSHIMITSU [JP]) 27. September 2012 (2012-09-27) * Absatz [0095] - Absatz [0104]; Abbildungen 9,10 * | 1,8, 12-15 | |
| A | US 2005/274360 A1 (MUMFORD DAVID [CA] ET AL) 15. Dezember 2005 (2005-12-15) * Absätze [0011], [0119] - [0124]; Abbildungen * | 2-4,7 | |
| A | WO 2011/072293 A2 (PURDUE RESEARCH FOUNDATION [US]; SHAVER GREGORY MATTHEW [US]; SATKOSKI) 16. Juni 2011 (2011-06-16) * Seite 8 - Seite 13 * * Seite 19 - Seite 31 * * Seite 35 - Seite 37 * * Abbildungen 1-10,22 * | 2-7 | RECHERCHIERTE SACHGEBIETE (IPC) F02D F02M |
| A | DE 10 2012 109655 A1 (DENSO CORP [JP]) 10. April 2014 (2014-04-10) * Ansprüche; Abbildungen * | 5-7 | |

Der vorliegende Recherchenbericht wurde für alle Patentansprüche erstellt

| Recherchenort | Abschlußdatum der Recherche | Prüfer |
|---|---|---|
| München | 16. Juni 2016 | Aign, Torsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

12

**ANHANG ZUM EUROPÄISCHEN RECHERCHENBERICHT
ÜBER DIE EUROPÄISCHE PATENTANMELDUNG NR.**

EP 15 19 2922

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2016

| Im Recherchenbericht angeführtes Patentdokument | Datum der Veröffentlichung | Mitglied(er) der Patentfamilie | Datum der Veröffentlichung |
|---|---|---|---|
| WO 0183969 A2 | 08-11-2001 | US 6557530 B1<br>US 2004011325 A1<br>WO 0183969 A2 | 06-05-2003<br>22-01-2004<br>08-11-2001 |
| EP 2280161 A1 | 02-02-2011 | EP 2280161 A1<br>JP 5042357 B2<br>US 2011030655 A1<br>WO 2009125807 A1 | 02-02-2011<br>03-10-2012<br>10-02-2011<br>15-10-2009 |
| US 2012240670 A1 | 27-09-2012 | CN 102691588 A<br>DE 102012102336 A1<br>JP 5287915 B2<br>JP 2012202244 A<br>US 2012240670 A1 | 26-09-2012<br>27-09-2012<br>11-09-2013<br>22-10-2012<br>27-09-2012 |
| US 2005274360 A1 | 15-12-2005 | CA 2562025 A1<br>CN 1977105 A<br>EP 1766224 A1<br>JP 3161990 U<br>JP 2008502848 A<br>US 2005274360 A1<br>WO 2005121542 A1 | 22-12-2005<br>06-06-2007<br>28-03-2007<br>19-08-2010<br>31-01-2008<br>15-12-2005<br>22-12-2005 |
| WO 2011072293 A2 | 16-06-2011 | EP 2510217 A2<br>US 2013019842 A1<br>WO 2011072293 A2 | 17-10-2012<br>24-01-2013<br>16-06-2011 |
| DE 102012109655 A1 | 10-04-2014 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10055192 A1

**In der Beschreibung aufgeführte Nicht-Patentliteratur**

- **ISERMANN ; ROLF.** Digitale Regelsysteme. Springer Verlag, 1977, 379 ff

- **F. CASTILLO et al.** Simultaneous Air Fraction and Low-Pressure EGR Mass Flow Rate Estimation for Diesel Engines. *IFAC Joint conference SSSC-5th Symposium on System Structure and Control, Grenoble, France,* 2013